# EUROPEAN PATENT SPECIFICATION

(11) **EP 1 719 031 B1**
(45) Date of publication and mention of the grant of the patent: **07.12.2016**
(21) Application number: 05702935.7
(22) Date of filing: 10.02.2005
(51) Int. Cl.: G05D 1/02

(54) **A ROBOT VACUUM CLEANER AND A CONTROL METHOD**
ROBOTER-STAUBSAUGER UND STEUERVERFAHREN
ROBOT ASPIRATEUR ET SON PROCEDE DE COMMANDE

(30) Priority: 12.02.2004 TR 200400242
(43) Date of publication of application: 08.11.2006
(73) Proprietor: Arçelik Anonim Sirketi, 34950 Istanbul (TR)
(72) Inventor: ERENAY, Kerem Arcelik Anonim Sirketi, 34950 Istanbul (TR); BAYKUT, Alper Arcelik Anonim Sirketi, 34950 Istanbul (TR); KARAASLAN, Kuntay Mustafa Arcelik Anonim Sirketi, 34950 Istanbul (TR); GUCLU, Yusuf Arcelik Anonim Sirketi, 34950 Istanbul (TR); GULER, Hakan Arcelik Anonim Sirketi, 34950 Istanbul (TR); MEYDANLI, Can Arcelik Anonim Sirketi, 34950 Istanbul (TR)
(86) International application number: PCT/IB2005/050516
(87) International publication number: WO 2005/077240

(56) References cited:
- WO-A-02/062194
- WO-A-02/071175
- WO-A-03/026474
- JP-A- 2002 323 925
- JP-A- 2003 256 043
- US-A- 6 076 025
- US-A1- 2002 116 089
- US-A1- 2003 025 472
- US-B1- 6 481 515
- US-B1- 6 574 536
- PATENT ABSTRACTS OF JAPAN vol. 2003, no. 12, 5 December 2003 (2003-12-05) & JP 2003 241832 A (MATSUSHITA ELECTRIC IND CO LTD), 29 August 2003 (2003-08-29)

## Description

This invention relates to a control method fort an autonomous robot vacuum cleaner whereby the floor or floor tiles are cleaned.

Vacuum cleaners are used to clean the floors of closed environments such as a home or an office. The fact that vacuum cleaners are used by users causes loss of both labour and time. In order to eliminate this disadvantage, self-moving vacuum cleaners named robot vacuum cleaners, have been developed.

Robot vacuum cleaners attempt to clean the floor of the place by roaming around utilizing certain movement algorithms. The performance of the robot vacuum cleaners is evaluated with respect to three measures: coverage, cleaning rate and perceived effectiveness. To improve this performance, several sensors are placed onto the robot vacuum cleaner and several algorithms are developed according to the values detected by sensors.

In the current state of the art, in the United States Patent Document US 5293955, a description is given of a self-propelled cleaning robot. In this invention, ultrasonic sensors located at the corners of the robot body at an angle of 45 degrees, are utilized. Obstacles in the environment are sensed by means of the said sensors and the wheels connected to the body enabling the motion of the body, are controlled considering the obstacles detected by the said sensors.

In the current state of the art, in the United States Patent Document US 5369347, an infrared sensor which senses infrared heat emitted from living entities and ultrasonic sensors are located on the body of the robot vacuum cleaner. By changing the direction of the robot cleaner at certain time intervals, travelling the predetermined maximum distance is achieved.

In the current state of the art, in the United States Patent Document US 5568589, a description is given of a self-propelled cleaning robot with fuzzy logic control. First, an area is determined by traveling along the external boundary of the environment. The internal area which is not travelled by the robot vacuum cleaner is subtracted from the afore-mentioned area and, the said internal area is traveled in a certain direction and at a certain speed which are determined according to the information obtained from the sensors placed on the body of the robot vacuum cleaner.

In the current state of the art, in the United States Patent Document US 5935179, one or more mechanical touch sensors placed to the front section of the robot vacuum cleaner and a stripe-shaped ultrasonic sensor extending along the front perimeter of the cleaner, are utilized.

In the International Patent Application 02101477, a description is given of a robot vacuum cleaner operating in a plurality of modes. It is achieved that the environment is covered effectively by incorporating obstacle following and random bounce algorithms.

In the International Patent Application 02067745, a description is given of a robot vacuum cleaner comprising a movable bumper attached onto the chassis. JP2003256043 discloses a cleaning robot and control method for cleaning a surface to be cleaned.

The object of the present invention is the realization of a control method of an autonomous robot vacuum cleaner whereby the environment is cleaned in the most efficient manner.

The robot vacuum cleaner and the control method thereof designed to fulfill the objective of the present invention is illustrated in the attached figures where:
Fig.1 - is a perspective view of a robot vacuum cleaner.
Fig.2 - is a front view of a robot vacuum cleaner.
Fig.3 - is a side view of a robot vacuum cleaner.
Fig.4 - is a top-view schematic representation of a robot vacuum cleaner.
Fig.5 - is a general flowchart of a control method of the robot vacuum cleaner.
Fig.6 - is a flowchart of a wall/obstacle following algorithm.

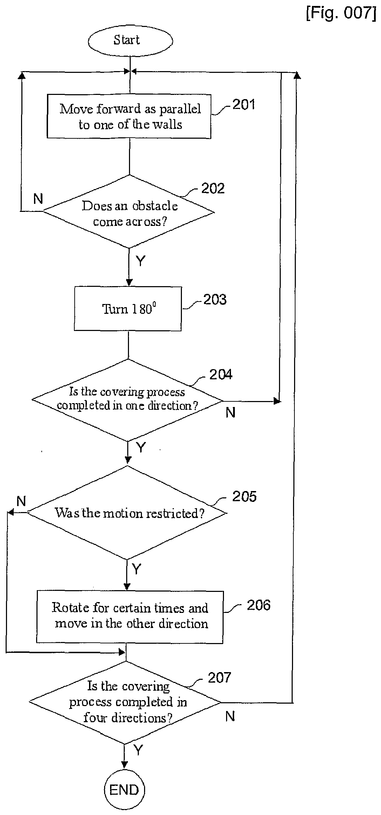

Fig.7 - is a flowchart of a periodic coverage algorithm.
Fig.8 - is a flowchart of a random travel algorithm.
Fig.9 - is a schematic representation of a wall/obstacle following algorithm of the robot vacuum cleaner and of the travel path (P) along the wall.
Fig.10 - is a detailed schematic representation of a wall/obstacle following algorithm of the robot vacuum cleaner and of the travel path (P) along the wall or obstacle.
Fig.11 - is a schematic representation of a periodic coverage algorithm of the robot vacuum cleaner and of the travel path (P).
Fig. 12 - is a schematic representation of a random travel algorithm of the robot vacuum cleaner and of the travel path (P).

Parts shown in figures are numbered as follows:
1. Robot Vacuum Cleaner
2. Body
3. Bumper
4. Ultrasonic Sensor
5. Infrared Sensor
6. Touch Sensor
7. Wheel
8. Aperture
9. Spring

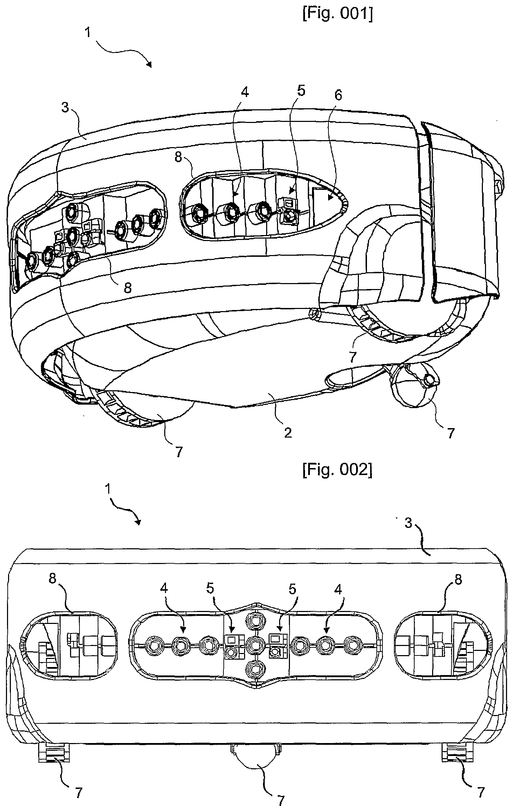

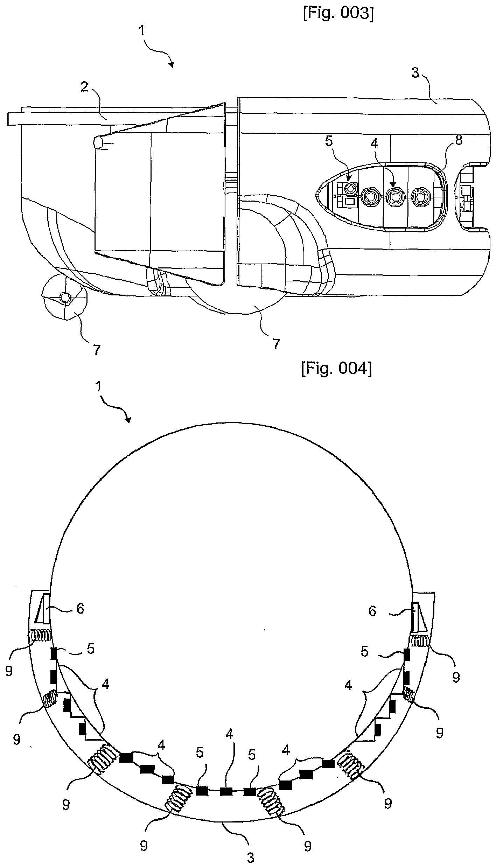

The robot vacuum cleaner (1), used in the control method of the present invention, comprises a body (2), a power supply, one or more wheels (7) attached to the body, which facilitate the movement of the body (2), one or more motors used to move the wheels. by utilizing the energy obtained from the power supply, one or more ultrasonic sensors (4) positioned onto the body (2), sensing different quantities, one or more infrared sensors (5), one or more touch sensors (6) which consist of switches detecting a contact, a control unit which controls the motor with respect to the information obtained through the said sensors (4, 5, 6), a bumper (3) -attached along the perimeter of the body (2)-which (3) moves towards the body (2) at an instant of contact and is used to transmit the contact force to touch sensors (6) after a contact with an obstacle and, one or more springs located between the bumper (3) and the body (2), used to return the bumper (3) back to its original position (Figure 1, Figure 2, Figure 3 and Figure 4).

The ultrasonic sensor (4) carries out the sensing process according to sound waves and thus, an obstacle can be detected by sensing the sound waves reflected by a surface. However, some surfaces (for example a tulle curtain etc.) do not reflect sound waves and therefore, the obstacle can not be detected by the ultrasonic sensor (4). In order to prevent that situation, infrared sensors (5) detecting infrared radiation are utilized. In addition to that, there are also surfaces, such as black covered surfaces, which can not be detected by infrared sensors (5). Touch sensors (6) are utilized to ensure that obstacles are detected even when both ultrasonic sensors (4) and infrared sensors (5) do not operate. By means of ultrasonic and infrared sensors (4, 5) placed, it is attempted to determine whether there is an obstacle at the right, left and front sides and furthermore, in a situation where ultrasonic and infrared sensors (4, 5) can not make any detection, touch sensors (6) are utilized.

There are preferably three ultrasonic sensor (4) groups placed on both sides and the middle of the front of the body (2). In ultrasonic sensors (4), the number of transmitters exceeds the number of receivers wherein the said transmitters surround the said receivers. In the right and left groups, there are ultrasonic transmitters positioned on both sides of the ultrasonic receivers. And in the middle group, ultrasonic transmitters are positioned at all sides of the ultrasonic receivers. Thereby, the probability of the receiver's capturing the reflection which is generated as a result of the hitting of the sound waves sent by transmitters to an obstacle is increased. As for the infrared sensors (5), they are positioned at the front and on both sides of the front on the body (2).

The bumper (3) is used to both transmit the contact force to touch sensors (6) which detect a contact and to prevent the sensors (4, 5, 6) positioned on the body (2) from being damaged as a result of the contact. The bumper (3) comprises an aperture (8) at the surface corresponding to the section where ultrasonic and infrared sensors (4, 5) are positioned on the body (2) which (8) ensures that the detection of sensors (4, 5) is not obstructed.

To be able to transmit the contact force to the touch sensors (6) immediately after the contact, the spring constant of the springs (9) is chosen to be small and additionally, the number of the springs (9) is increased. Thereby, the springs (9) at the contact area do not resist so much to increase the time necessary for the bumper (3) to reach the touch sensors (6), however they can apply a force large enough to bring the bumper (3) back to its original position after the contact is over.

The bumper (3) extends at the horizontal axis along the perimeter of the body (2), covering an area of preferably 180°. When a contact occurs at any point within the afore-mentioned area, contact section of the bumper (3) approaches the body (2) while the rest of the area moves away from the body (2) thereby ensuring an exact determination of contact location by activating the touch sensor (6) which is the closest one to the contact and by not activating the rest. The bumper (3) is mounted onto the body (2) so that it can activate the touch sensor (6) with the same direction as the applied force, by moving in a direction perpendicular to the applied force at the instant of a contact at any point.

There are preferably three wheels (7) attached to the robot vacuum cleaner (1). Two of the afore-mentioned wheels (7) are actuated by one or two motors while the third wheel (7) which is not actuated by any motor and is smaller than the others can rotate 360° around its axis. When only one motor is used in the robot vacuum cleaner (1), it is achieved to transmit the power to the wheels (7) by utilizing various power transmission components. In the preferred embodiment of the present invention, two motors are utilized wherein both of the wheels (7) are actuated independent of each other. Thereby, it is accomplished to increase the maneuverability of the robot vacuum cleaner (1) (Figure 1).

The geometry of the body (2) and the positioning of the wheels (7) on the body (2) are designed so that the robot vacuum cleaner (1) can get out of any place that it goes in during its movement. For that reason, the body (2) is formed in a circular shape wherein the rotation axis of the wheels (7) intersects the geometric center of the said circular shape. Thereby, it is achieved that the robot vacuum cleaner (1) can rotate around its axis. The robot vacuum cleaner (1) is capable of doing following movements: back and forth motion, rotation about its axis and rotation around a fixed wheel (7).

The robot vacuum cleaner (1) the object of the present invention, is enabled to move by some certain algorithms arranged with respect to the signals detected by sensors (4, 5, 6). The robot vacuum cleaner (1) is able to move by incorporating different algorithms that may perform the following tasks; following the wall of the place to be cleaned, covering the floor of the place periodically, randomly and with respect to the obstacles in the place.

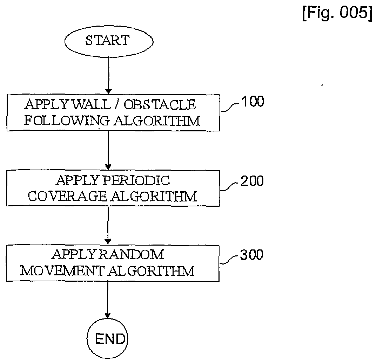

When the robot vacuum cleaner (1) is turned on, first the wall / obstacle following algorithm is applied wherein the robot vacuum cleaner (1) travels along all the walls surrounding the environment by following the wall of the place (100). After the robot vacuum cleaner (1) travels along all the walls surrounding the environment, the wall / obstacle following algorithm finishes and the periodic coverage algorithm starts to be applied wherein the robot vacuum cleaner (1) covers the floor of the environment periodically by traveling parallel to any of the walls (200). After the periodic coverage algorithm is repeated in four directions, the random movement algorithm starts to be applied (300) wherein the robot vacuum cleaner (1) travels randomly on the floor by going straight for one or more times, turning random for one or more times and following a wall or an obstacle for one or more times, respectively, and thereby it is achieved that the robot vacuum cleaner (1) cleans the floor by travelling in a most efficient way (Figure 5).

Through the wall / obstacle following algorithm, it is achieved that the robot vacuum cleaner (1) cleans the sides of the walls by traveling along the walls and also that the circumference of the place to be cleaned is calculated. Here by calculating the said circumference, the time that it takes for the random movement algorithm which will be applied in the subsequent steps, to control the motion of the robot vacuum cleaner (1), is determined.

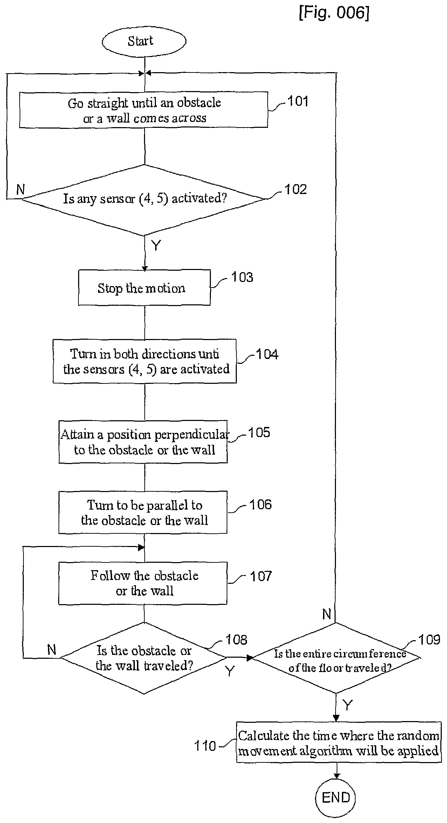

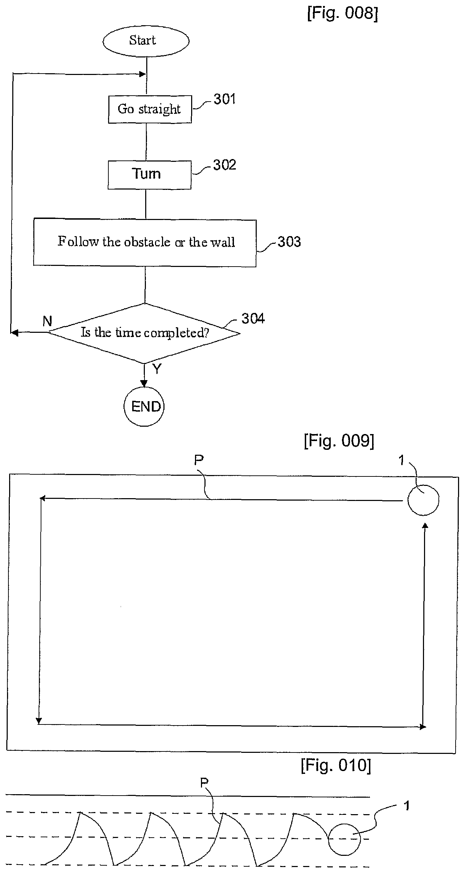

In the wall / obstacle following algorithm, after the robot vacuum cleaner (1) is placed on the floor of the environment, the robot vacuum cleaner (1) moves straight on until it comes across an obstacle or a wall (101). The first step (101) is applied until any of the sensors (4, 5, 6) is activated (102). When the robot vacuum cleaner (1) comes across an obstacle or a wall and accordingly when any of the ultrasonic, infrared or touch sensors (4, 5, 6) positioned at the front of the robot vacuum cleaner (1) is activated (102), the on going motion of the robot vacuum cleaner (1) is stopped (103). In order for the robot vacuum cleaner (1) to be positioned perpendicular to the obstacle or to the wall, the robot vacuum cleaner (1) is rotated (104) first 90° to the left / right and then 135° to the left / right until all of the ultrasonic or infrared sensors (4, 5) at the front, are activated. When all of the sensors (4, 5, 6) at the front are activated, the robot vacuum cleaner (1) is positioned perpendicular to the obstacle or to the wall (105). After this point, the robot vacuum cleaner (1) is rotated (106) so that the side of the robot vacuum cleaner (1) that is chosen as the active one is parallel to the obstacle or to the wall and, the floor is traveled by following the obstacle or the wall (107). This procedure is continued until the obstacle or the wall is traveled (108). After one complete cycle, it becomes clear whether the object that the robot vacuum cleaner (1) came across on the floor is an obstacle or a wall bordering the floor. It is understood that the obstacle or the wall is traveled when one side of the robot vacuum cleaner (1) is taken as a reference and when the total of the distance traveled by the robot vacuum cleaner (1) in that reference direction and in the direction opposite to that direction, corresponds to a predetermined angle which is preferably 360°. For example: If the right side is assumed to be the active side and counterclockwise direction is accepted as the positive direction, when a wall is traveled + 360° is completed whereas - 360° is completed when an obstacle is traveled. If entire circumference is not traveled (109), the procedure is repeated by returning to the first step (101). On the other hand, if entire circumference is travelled (109), the information obtained through the wall / obstacle following algorithm is utilized to calculate the time where the robot vacuum cleaner (1) will operate according to the random movement algorithm (110) (Figure 6 and Figure 9).

As a result of rotating the wheels (7) of the robot vacuum cleaner (1) at different speeds by using motors, it is achieved to move the robot vacuum cleaner (1) on consecutive arcs along an obstacle or a wall. In the robot vacuum cleaner (1), when each one of the wheels (7) coupled to a motor is rotated at a different speed, a circular motion is obtained in the direction of the low speed side. The robot vacuum cleaner (1) makes a circular motion with a radius which decreases as the difference between the speeds of the wheels (7) increases and increases as the difference between the speeds of the wheels (7) decreases. If the robot vacuum cleaner (1) is too close to the obstacle or to the wall it needs to move away from the obstacle and if it is too far from the obstacle it needs to approach the obstacle. To approach the obstacle, the wheel (7) that is more distant to the obstacle is driven at a higher speed thereby obtaining an arc motion wherein the robot vacuum cleaner (1) approaches the obstacle. To move away from the obstacle, the wheel (7) that is closer to the obstacle is driven at a higher speed thereby obtaining an arc motion wherein the robot vacuum cleaner moves away from the obstacle. By rotating the wheels (7) at different speeds as described, the robot vacuum cleaner (1) moves inside an interval with a specific lower and upper limit (hysteresis band) by following the obstacle or the wall. If the robot vacuum cleaner (1) moves inside the said interval, it means that the robot vacuum cleaner (1) travels, on an average, parallel to the obstacle.

In the wall / obstacle following algorithm, the speed of the wheels (7) are determined with respect to the radius of the arc to be formed and this radius is fixed. In this way, considerable ease is obtained concerning angle calculations. It is determined whether the object that the robot vacuum cleaner (1) came across on the floor is an obstacle or a wall bordering the floor, by adding together the angles of arc movements made by the robot vacuum cleaner (1). In order to determine the angular position, while the right side is active, the distance traveled by the left wheel (7) during the arc motion to the right and the distance traveled by the right wheel (7) during the arc motion to the left, are added together. Another factor to be considered while doing angle calculations is the situation where touch sensors (6) are activated. In a situation where the ultrasonic and infrared sensors (4, 5) are incapable for some reason, the robot vacuum cleaner (1) hits the obstacle and then an arc motion of preferably 30° is performed in the direction opposite to the active side. The said angle is also included in angle calculations.

In the preferred embodiment of the present invention, the wall surrounding the room is traveled while both the right and the left sides of the robot vacuum cleaner (1) are the active side alternately and thereby calculating the circumference of the room as correct as possible wherein a possible mistake at one of the calculations is attempted to be compensated by the other calculation performed while the other direction is the active side.

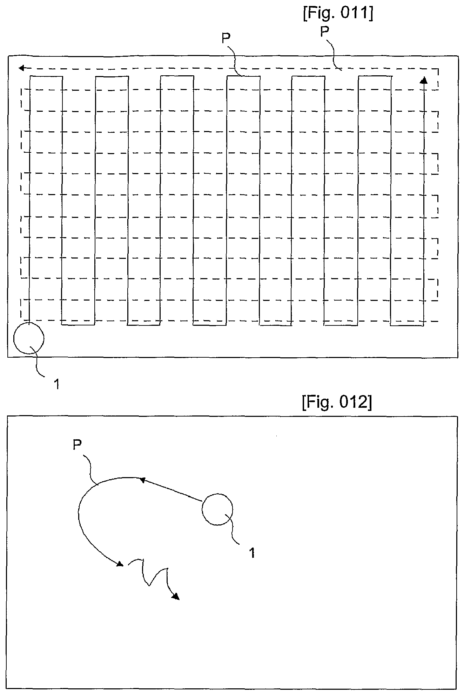

After the wall / obstacle following algorithm is completed, the periodic coverage algorithm starts to be applied wherein the robot vacuum cleaner (1) periodically travels parallel to any of the walls. In this algorithm, one of the walls is taken as a reference and the robot vacuum cleaner (1) periodically travels parallel to one of the walls (201). During this movement, when the robot vacuum cleaner (1) comes across an obstacle or a wall (202), the robot vacuum cleaner (1) turns 180° (203) and thereby, it is achieved to cover the floor periodically. After every turn (203), it is checked whether the covering process is completed in one direction (204). If the covering process is completed in one direction, the procedure continues with the step wherein it is checked whether the robot vacuum cleaner (1) has been in a situation where it could not move in both directions during the covering process (205). If the robot vacuum cleaner (1) has been in a situation where it could not move in both directions, the robot vacuum cleaner (1) is rotated some certain times to move in the other direction (206) and thereby ensuring that if there are any walls between the said directions and intersecting at a certain angle, the robot vacuum cleaner (1) travels also in the area between the mentioned walls. The periodic coverage motion is repeated in four directions. If the motion is performed in all of the four directions (207), the motion finishes and the random movement algorithm starts to be applied (300). If the motion is not performed in four directions, the procedure is repeated by returning to the first step (201). Since the periodic coverage algorithm is repeated in four major directions, the obstacles that the robot vacuum cleaner (1) came across while the algorithm is running are ignored and the coverage procedure is performed. While performing the motion, it is assumed that the non-traveled areas in the shifting direction would be traveled during coverage motion in other directions since the coverage motion is performed in four directions (Figure 9 and Figure 11).

After the coverage procedure (200) performed according to the periodic coverage algorithm is completed, the random movement algorithm starts to be applied (300). The random movement algorithm is utilized to direct the robot vacuum cleaner (1) for a period of time determined as a result of the wall / obstacle following algorithm. The random movement algorithm comprises the steps of going straight for one or more times (301), turning random for one or more times (302) and following a wall or an obstacle for a certain period of time (303). The above-mentioned steps of random movement algorithm (301, 302, 303) are repeated for a specific period of time determined with respect to the dimensions of the place that is to be traveled, while traveling the wall by utilizing the wall / obstacle following algorithm (304). In that algorithm, the possibility of the robot vacuum cleaner (1) to get stuck in one part of the room, is minimized and it is achieved that the robot vacuum cleaner (1) continues its random motion in another place by getting out of the door of the room (Figure 8 and Figure 12).

By incorporating the wall / obstacle following algorithm, the periodic coverage algorithm and the random movement algorithm, it is achieved that the robot vacuum cleaner (1) travels the area to be cleaned in a most efficient manner.

The following aspects do not form part of the invention but may be useful to understand the invention. The energy that is necessary for the robot vacuum cleaner (1) is obtained from a rechargeable power supply (battery etc.). For a situation where the energy level of the power supply of the robot vacuum cleaner (1) falls below a certain level, a specific algorithm is developed in order to locate the charging unit which is placed in the environment and is powered by the network voltage. To be able to apply the mentioned algorithm, preferably two infrared transmitters -emitting weak signals-are positioned on the charging unit.

When the power supply of the robot vacuum cleaner (1) weakens, charging-unit-finding algorithm starts to be applied. At the starting instant of that algorithm, the infrared transmitters on the robot vacuum cleaner (1) are off whereas the infrared receivers are on. Therefore, if there is any infrared signal detected, it is understood that the said signal is emitted by the charging unit. The reason that the signal emitted by the charging unit is weak is because during the normal operation of the robot vacuum cleaner (1), it is attempted to prevent that the robot vacuum cleaner (1) detects a non-existing obstacle in the direction of the received signals which indeed are emitted by the charging unit. The wall following and the obstacle following algorithms provide a basis for the charging-unit-finding algorithm. When the charging-unit-finding algorithm starts, the walls and the obstacles that come across are covered. If the signal emitted by the charging unit is detected while covering the environment by utilizing the afore-mentioned algorithms, the robot vacuum cleaner (1) starts to move in a direction so that the two infrared transmitters on the charging unit and the receivers on the robot vacuum cleaner (1) which detect the signal emitted by the said transmitters are facing one another. As the robot vacuum cleaner (1) attains a position where the transmitter and the receiver face each other, the robot vacuum cleaner (1) gets locked with the charging unit wherein the charge location on the robot vacuum cleaner (1) fits to the charging unit. While the sensors utilized in the charging-unit-finding algorithm are infrared sensors, ultrasonic sensors may be utilized as well.

With the robot vacuum cleaner (1) described herein, it is achieved that the place is cleaned in a most efficient manner without the supervision of a user and that the power supply of the robot vacuum cleaner (1) can be recharged as the said supply weakens.

## Claims

1. A control method for a robot vacuum cleaner (1) for cleaning the floor of a place in a most efficient manner and wherein the control method comprises the following steps;
- first the wall/obstacle following algorithm is applied (100) wherein the robot vacuum cleaner (1) travels along all the walls surrounding the place by following the wall of the place, and wherein the circumference of the place to be cleaned is calculated,
- after all of the walls surrounding the place are traveled along, the wall/obstacle following algorithm finishes, and the periodic coverage algorithm (200) is applied wherein the robot vacuum cleaner (1) periodically travels parallel to any of the walls,
- after the periodic coverage algorithm is completed, the random movement algorithm (300) wherein the robot vacuum cleaner (1) travels randomly on the floor by going straight for one or more times, turning randomly for one or more times and following a wall or an obstacle for one or more times, respectively, is applied for a period of time calculated by utilizing the circumference of the place to be cleaned obtained through the wall/obstacle following algorithm.

2. A control method as described in Claim 1, which comprises the following steps; during the application of the wall/obstacle following algorithm (100);
- after the robot vacuum cleaner (1) is placed on the floor of the place, the robot vacuum cleaner (1) goes straight until it comes across an obstacle or a wall (101),
- when the robot vacuum cleaner (1) comes across an obstacle or a wall and accordingly when any of the ultrasonic, infrared or touch sensors (4,5, 6) positioned at the front of the robot vacuum cleaner (1) is activated (102), the ongoing motion of the robot vacuum cleaner (1) is stopped (103),
- in order for the robot vacuum cleaner (1) to be positioned perpendicular to the obstacle or to the wall, the robot vacuum cleaner (1) is rotated first 90 to the left/right and then 135 to the left/right until all of the ultrasonic or infrared sensors (4,5) at the front, are activated (104),
- the robot vacuum cleaner (1) is positioned perpendicular to the obstacle or to the wall (105),
- the robot vacuum cleaner (1) is rotated 90 so that the side of the robot vacuum cleaner (1) that is closer to the obstacle or wall is parallel to the obstacle or to the wall (106),
- the floor is traveled by following the obstacle or the wall (107) until the obstacle or the wall is traveled (108) and,
- the procedure is repeated by returning to the first step (101) until the entire floor is traveled (109).

3. A control method as described in Claim 1, which comprises the following steps during the application of the periodic coverage algorithm (200);
- one of the walls is taken as a reference and the robot vacuum cleaner (1) periodically travels parallel to one of the walls (201),
- when the robot vacuum cleaner (1) comes across an obstacle or a wall (202), it turns 180 (203),
- after every turn (203), it is checked whether the covering process is completed in one direction (204),
- if the covering process is completed in one direction, the procedure continues with the step wherein it is checked whether the robot vacuum cleaner (1) has been in a situation where it could not move in both directions during the covering process (205),
- if the robot vacuum cleaner (1) has been in a situation where it could not move in both directions, the robot vacuum cleaner (1) is rotated some certain times to move in the other direction (206),
- if the robot vacuum cleaner (1) can move in both directions, it is returned to the first step of the algorithm (201),
- if the robot vacuum cleaner (1) can not move in both directions, the motion is stopped.

4. A control method as described in Claim 3, which comprises the following steps;
- the periodic coverage motion is performed in four directions (207),
- if the motion is performed in all of the four directions, the motion is finished,
- if the motion is not performed in four directions, the procedure is repeated by returning to the first step (201).

5. A control method as described in Claim 1, which comprises the steps of going straight for one or more times (301), turning random for one or more times (302) and following a wall or an obstacle for a certain period of time (303) applied respectively during the application of the random movement algorithm (300).

6. A control method as described in Claim 5, repeated for a period of time determined during the wall/obstacle following algorithm.

## Patentansprüche

1. Steuerungsverfahren für einen Roboterstaubsauger (1) zum Reinigen des Bodens einer Örtlichkeit auf möglichst effiziente Weise und wobei das Steuerungsverfahren die folgenden Schritte umfasst;
- erst wird der Wand-/Hindernisfolgealgorithmus angewandt (100), wobei sich der Roboterstaubsauger (1) an allen Wänden, die die Örtlichkeit umgeben, entlang bewegt, indem er der Wand der Örtlichkeit folgt, und wobei der Umfang der zu reinigenden Örtlichkeit berechnet wird,
- nach dem Bewegen an allen Wänden entlang, die die Örtlichkeit umgeben, endet der Wand-/Hindernisfolgealgorithmus und der periodische Abdeckungsalgorithmus (200) wird angewandt, wobei der Roboterstaubsauger (1) sich periodisch parallel zu beliebigen der Wände bewegt,
- nach Abschluss des periodischen Abdeckungsalgorithmus wird der Zufallsbewegungsalgorithmus (300), wobei der Roboterstaubsauger (1) sich zufällig auf dem Boden bewegt, indem er sich ein- oder mehrmals geradeaus bewegt und ein- oder mehrmals einer Wand oder einem Hindernis folgt, für einen Zeitraum angewandt, der anhand des Umfangs der zu reinigenden Örtlichkeit berechnet wird, der durch den Wand-/Hindernisfolgealgorithmus erlangt wurde.

2. Steuerungsverfahren nach Anspruch 1, der folgende Schritte umfasst; während der Anwendung des Wand-/Hindernisfolgealgorithmus (100);
- nachdem der Roboterstaubsauger (1) auf den Boden der Örtlichkeit gesetzt wurde, sich der Roboterstaubsauger (1) geradeaus bewegt, bis er ein Hindernis oder eine Wand erreicht (101),
- wenn der Roboterstaubsauger (1) ein Hindernis oder eine Wand erreicht und wenn entsprechend ein beliebiger der Ultraschall-, Infrarot- oder Berührungssensoren (4, 5, 6), die an der Vorderseite des Roboterstaubsaugers (1) angeordnet sind, aktiviert wird (102), die derzeitige Bewegung des Roboterstaubsaugers (1) angehalten wird (103),
- um den Roboterstaubsauger (1) senkrecht zu dem Hindernis oder der Wand zu positionieren, der Roboterstaubsauger (1) zunächst um 90 Grad nach links/rechts und dann um 135 Grad nach links/rechts gedreht wird, bis alle Ultraschall- oder Infrarotsensoren (4, 5) auf der Vorderseite aktiviert wurden (104),
- der Roboterstaubsauger (1) senkrecht zu dem Hindernis oder der Wand positioniert (105) wird,
- der Roboterstaubsauger (1) um 90 Grad gedreht wird, so dass die Seite des Roboterstaubsaugers (1), die näher an dem Hindernis oder der Wand ist, parallel zu dem Hindernis oder der Wand ist (106),
- eine Bewegung am Boden erfolgt, während dem Hindernis oder der Wand gefolgt wird (107), bis das Hindernis oder die Wand abgefahren wurde (108) und
- der Vorgang durch Rückkehr zum ersten Schritt wiederholt wird (101), bis der gesamte Boden befahren wurde (109).

3. Steuerungsverfahren nach Anspruch 1, der folgende Schritte umfasst; während der Anwendung des periodische Abdeckungsalgorithmus (200);
- eine der Wände als Referenz herangezogen wird, und der Roboterstaubsauger (1) sich periodisch parallel zu einer der Wände bewegt (201),
- wenn der Roboterstaubsauger (1) auf ein Hindernis oder eine Wand trifft (202), er um 180 Grad wendet (203),
- nach jeder Wendung (203) geprüft wird, ob der Abdeckungsvorgang in einer Richtung abgeschlossen wurde (204),
- wenn der Abdeckungsvorgang in einer Richtung abgeschlossen wurde, der Vorgang fortgesetzt wird, wobei geprüft wird, ob der Roboterstaubsauger (1) während des Abdeckungsvorgangs in einer Situation war, in der er sich in beide Richtungen nicht bewegen kann (205),
- wenn der Roboterstaubsauger (1) in einer Situation war, in der er sich in beide Richtungen nicht bewegen kann, der Roboterstaubsauger (1) einige Male gedreht wird, damit er sich in eine andere Richtung bewegt (206),
- wenn sich der Roboterstaubsauger (1) in beide Richtungen bewegen kann, eine Rückkehr zum ersten Schritt des Algorithmus erfolgt (201),
- wenn der Roboterstaubsauger (1) sich in beide Richtungen nicht bewegen kann, die Bewegung angehalten wird.

4. Steuerungsverfahren nach Anspruch 3, das die folgenden Schritte umfasst;
- die periodische Abdeckungsbewegung wird in vier Richtungen durchgeführt (207),
- wenn die Bewegung in alle vier Richtungen durchgeführt wurde, wird die Bewegung beendet,
- wenn die Bewegung nicht in alle vier Richtungen durchgeführt wurde, wird der Vorgang durch Rückkehr zum ersten Schritt wiederholt (201).

5. Steuerungsverfahren nach Anspruch 1, das den Schritt umfasst, dass ein- oder mehrmals eine Bewegung geradeaus erfolgt (301), ein- oder mehrmals zufällig gewendet wird (302) und für einen Zeitraum einer Wand oder einem Hindernis gefolgt wird (303), was jeweils während der Anwendung des Zufallsbewegungsalgorithmus (300) angewandt wird.

6. Steuerungsverfahren nach Anspruch 5, das für einen Zeitraum wiederholt wird, der während des Wand-/Hindernisfolgealgorithmus bestimmt wird.

## Revendications

1. Un procédé de commande pour un robot aspirateur (1) pour nettoyer le sol d'un lieu d'une manière plus efficace et où le procédé de commande comprend les étapes suivantes;
- d'abord l'algorithme à suivre un mur/obstacle est effectué (100) où le robot aspirateur (1) se déplace le long de tous les murs entourant le lieu en suivant le mur du lieu, et où la circonférence du lieu à nettoyer est calculée,
- après que tous les murs entourant le lieu sont suivis, l'algorithme à suivre un mur/obstacle est terminé, et l'algorithme de couverture périodique (200) est effectué où le robot aspirateur (1) se déplace périodiquement parallèlement à l'un des murs,
- après que l'algorithme de couverture périodique est terminé, l'algorithme de mouvement aléatoire (300), où le robot aspirateur (1) se déplace aléatoirement sur le sol en continuant tout droit une ou plusieurs fois, en tournant aléatoirement une ou plusieurs fois et suivant un mur et un obstacle une ou plusieurs fois, respectivement, est effectué pendant une période de temps calculée en utilisant la circonférence du lieu à nettoyer obtenue tout au long de l'algorithme à suivre un mur/obstacle.

2. Un procédé de commande selon la Revendication 1, qui comprend les étapes suivante, pendant la réalisation de l'algorithme à suivre un mur/obstacle (100),
- après que le robot aspirateur (1) est placé sur le sol du lieu, le robot aspirateur (1) continue tout droit jusqu'à ce qu'il rencontre un obstacle ou un mur (101),
- lorsque le robot aspirateur (1) rencontre un obstacle ou un mur et donc lorsque l'un des capteurs ultrasonores, infrarouges ou tactiles (4, 5, 6) positionnés à l'avant du robot aspirateur (1) est activé (102), le mouvement continu du robot aspirateur (1) est arrêté (103),
- afin que le robot aspirateur (1) soit positionné perpendiculairement à l'obstacle ou au mur, le robot aspirateur (1) est tourné d'abord de 90 degrés vers la gauche/droite et puis de 135 degrés vers la gauche/droite jusqu'à ce que tous les capteurs infrarouges ou ultrasonores (4, 5) à l'avant sont activés (104),
- le robot aspirateur (1) est positionné perpendiculairement à l'obstacle ou au mur (105),
- le robot aspirateur (1) est tourné de 90 degrés de telle sorte que le côté du robot aspirateur (1) qui est plus proche de l'obstacle ou du mur est parallèle à l'obstacle ou au mur (106),
- le sol est parcouru en suivant l'obstacle ou le mur (107) jusqu'à ce que l'obstacle ou le mur est parcouru (108), et
- la procédure est répétée en revenant à la première étape (101) jusqu'à ce que tout le sol est parcouru (109).

3. Un procédé de commande selon la Revendication 1, qui comprend les étapes suivante, pendant la réalisation de l'algorithme de couverture périodique (200),
- un des murs est pris pour référence et le robot aspirateur (1) se déplace périodiquement parallèlement à un des murs (201),
- lorsque le robot aspirateur (1) rencontre un obstacle ou un mur (202), il tourne de 180 degrés (203),
- après chaque tour (203), il est vérifié si le processus de couverture est achevé dans une direction (204),
- si le processus de couverture est achevé dans une direction, la procédure continue avec l'étape où il est vérifié si le robot aspirateur (1) est dans une situation où il ne pouvait pas se déplacer dans les deux directions pendant le processus de couverture (205),
- si le robot aspirateur (1) est dans une situation où il ne pouvait pas se déplacer dans les deux directions, le robot aspirateur (1) est tourné quelques certaines fois afin de se déplace dans l'autre direction (206),
- si le robot aspirateur (1) peut se déplacer dans les deux directions, il est retourné à la première étape de l'algorithme (201),
- si le robot aspirateur (1) ne peut pas se déplacer dans les deux directions, le mouvement est arrêté.

4. Un procédé de commande selon la Revendication 3, comprenant les étapes suivantes :
- le mouvement de couverture périodique est effectué dans les quatre directions (207),
- si le mouvement est effectué dans toutes les quatre directions, le mouvement est terminé,
- si le mouvement n'est pas effectué dans les quatre directions, la procédure est répétée en retournant à la première étape (201).

5. Un procédé de commande selon la Revendication 1, qui comprend les étapes de continuer tout droit une ou plusieurs fois (301), tourner aléatoirement une ou plusieurs fois (302) et suivre un mur ou un obstacle pour une certaine période de temps (303) qui sont réalisées respectivement lors de la réalisation de l'algorithme de mouvement aléatoire (300).

6. Un procédé de commande selon la Revendication 5, qui est répété pour une période de temps déterminée lors de l'algorithme à suivre un mur/obstacle.
